Europäisches Patentamt

European Patent Office

Office européen des brevets

(19)

(11) Publication number: **0 103 354**
**A2**

(12) **EUROPEAN PATENT APPLICATION**

(21) Application number: **83303391.3**

(22) Date of filing: **13.06.83**

(51) Int. Cl.³: **G 01 L 3/10**

(30) Priority: 16.06.82 GB 8217430
16.06.82 GB 8217490

(43) Date of publication of application: **21.03.84**
Bulletin 84/12

(84) Designated Contracting States: **AT BE CH FR GB IT LI LU NL SE**

(71) Applicant: **GKN TECHNOLOGY LIMITED, Birmingham New Road, Wolverhampton WV4 6BW (GB)**

(72) Inventor: **Renowden, John Stuart, 25 Gander Hill, Haywards Heath West Sussex RH16 1QU (GB)**
Inventor: **Howell, Geoffrey James, 11 Clayhall Road, Droitwich Worcestershire (GB)**

(74) Representative: **Dodd, Graham Marshall et al, Guest Keen & Nettlefolds Plc. Group Patents and Licensing Department PO Box 55 Cranford Street, Smethwick Warley West Midlands B66 2RZ (GB)**

(54) **Torque measurement.**

(57) Apparatus for torque measurement in a rotating shaft, comprising a coil for inducing a magnetic field in the surface of the shaft, and a core structure having four poles adjacent the shaft surface with a sensing coil associated with each pole. The sensors of a first pair of poles have their output signals added, and those of a second pair added and subtracted from the combined signal of the first pair to give an output signal representing torque in the shaft. The sensors may be coils, or Hall-effect devices.

GMD/P82.024          TORQUE MEASUREMENT

This invention relates to the mesurement of torque in a rotating shaft.

It is well known that stress in materials, and in particular torque in shafts, can be measured by detecting changes in the magnetic properties of the material. For example, a torque transducer for an automobile engine crankshaft is disclosed in U.S. Patent 4,135,391. That torque transducer comprises a magnetic core structure with poles having coils for generating a magnetic field in the surface of the shaft, and further poles with detecting coils to sense changes in the field due to torque. This torque transducer, however, is relatively bulky and hence difficult to accommodate so as to measure torque in an automobile shaft part without design changes being made in the shaft part and the housing or other enclosure within which the shaft part operates. There have been many other proposals for methods of measuring torque, and many of these have suffered the disadvantages of being bulky, inaccurate, or both. It is the object of the present invention to overcome these disadvantages.

The invention provides apparatus for measuring torque in a rotating shaft, comprising means for inducing a magnetic field in a surface region of the shaft, and means responsive to changes in said magnetic field due to torque to measure said torque, comprising a ferro-magnetic core structure having four poles positioned adjacent the surface of the shaft, with a first pair of poles spaced axially and circumferentially of the shaft, a second pair of poles spaced axially and circumferentially of the shaft in a different orientation from said first pair, a sensor associated with each of said poles to measure the magnetic field therein and producing an electrical output signal representing said magnetic field, means for adding the output signals from said sensors of said first pair of poles, means for adding the output signals from said sensors of the second pair of poles, and means for subtracting the added signals thus derived from one another to produce an output signal representing torque in the shaft.

The invention makes use of the inverse Wiederman effect. When a ferro-magnetic material subjected to a magnetic field is stressed, the magnetic field in the material is distorted in accordance with the magnitude and direction of the stress. When a cylindrical shaft is loaded in torsion, the principle stress lines are $45^\circ$ helices around the axis of the shaft, one in tension and the other in compression. The magnetic permeability of the shaft material is also changed, in opposite senses, in these directions. Accordingly the magnetic field measured by sensors associated with poles spaced axially and circumferentially of the shaft in different orientations will provide a measurement of torque.

The sensors may be coils, one carried by each of said poles.

Aternatively the sensors may be Hall effect sensors associated with said poles. A Hall effect sensor uses a semiconductor material through which a current is flowing, the effect of a magnetic field being to distort the electrical field in the material which can be detailed as an output voltage. Such sensors are readily available, and may be interposed between the ends of said poles and the shaft.

Preferably the poles are arranged at the corners of a square figure having its sides parallel to and perpendicular to the rotational axis of the shaft, with the poles of each pair at opposite corners. This provides maximum sensitivity of the apparatus to changes in torque in the shaft.

The core structure may include a fifth pole, having a coil for inducing the magnetic field in the shaft. Alternatively, the magnetic field could be induced in the shaft by a separate means.

A coil for inducing the magnetic field in the shaft is preferably energised by an alternating current, and the signals from the sensors may have their positive and negative peak values detected, from which peak values are obtained the signals subtracted from one another to indicate torque. By taking peak values in this way, inaccuracies due to hysteresis effects are reduced.

The output signal from the apparatus is useful, for example in the control of the transmission of a motor vehicle, eg. an automatic gearbox or overdrive unit, in which one of the parameters of operation of the transmission required to be evaluated is torque in a selected element of the driveline of the vehicle. The apparatus can be used directly to measure the torque in the required element.

The invention will now be described by way of example with reference to the accompanying drawings, of which:-

Figure 1 shows diagrammatically the mechanical structure of a torque measuring apparatus according to the invention;

Figure 2 is a block diagram of an electrical circuit of the apparatus;

Figure 3 is a block diagram showing an alternative circuit.

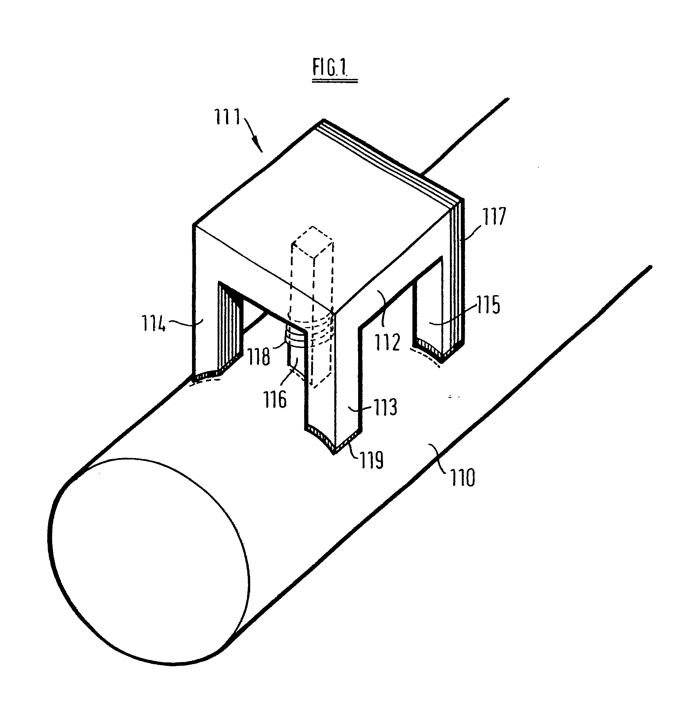

Referring firstly to Figure 1, there is shown a shaft 110 which is rotatable and subject to a torque. Positioned adjacent to the shaft is a magnetic core structure 111 having a base 112 and four poles extending towards the shaft, in square formation and of which three only are visible at 113, 114 and 115. Also extending from the base towards the shaft, at the centre thereof, is a fifth pole 116. The pole structure may be assembled from a plurality of iron laminations 117, or may be a ferrite material.

The fifth pole 116 carries a coil 118 which can be electrically energised from a suitable power supply so as to induce a magnetic field in the shaft 110. The other four poles are provided with sensors for detecting the magnetic field in the poles, and these sensors are coils (not shown) carried by the poles. The core assembly, coil 118, and sensors would be encapsulated in a suitable resin to form a robust unit which can easily be mounted relative to the shaft.

The sensors associated with the poles of the core structure may be coils carried by the poles. Alternatively, Hall-effect sensors could be interposed between the ends of the poles and the shaft. A Hall-effect sensor uses a semi-conductor material through which an electric current is flowing, the effect of a magnetic field on which is to distort the electric field in a semi-conductor material, which can be detected at an output voltage. Hall-effect sensors are available as relatively small components which can easily be mounted on the ends of the poles of a structure such as that shown in Figure 1.

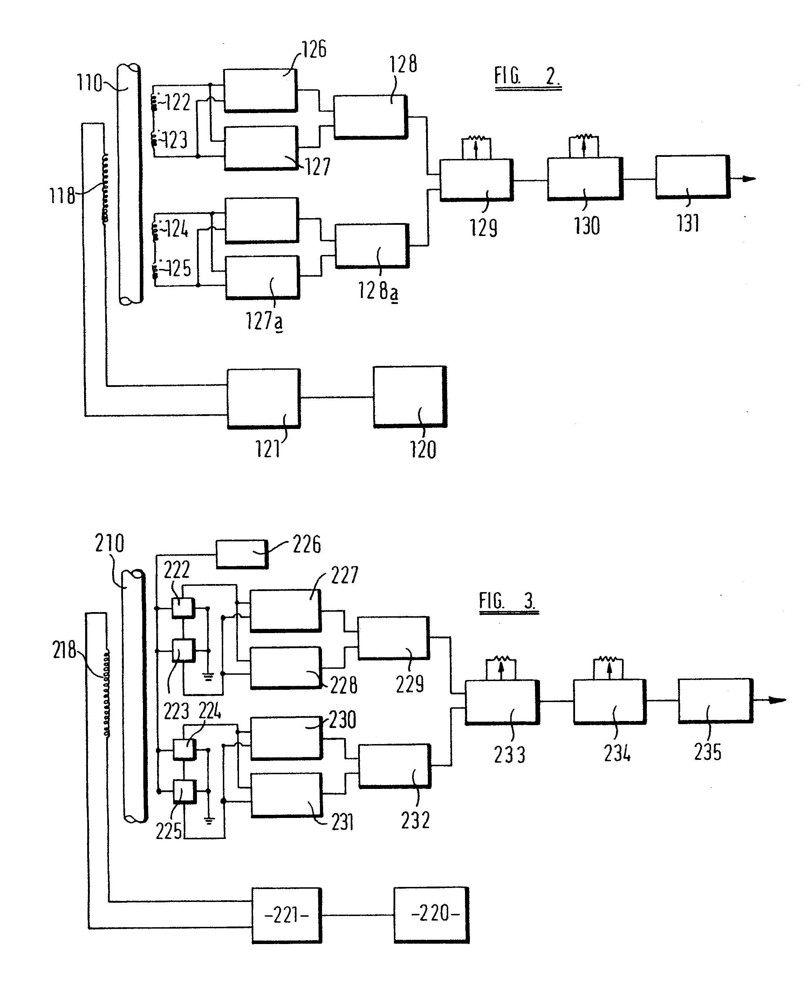

When the shaft is subjected to torque the magnetic permeability is altered in that it is increased in one direction helically of the shaft and decreased in the opposite helical sense. Thus, for torque applied in the appropriate sense to the shaft, the magnetic field in poles 114 and 115 will be increased and that in the other two poles decreased. The change in field detected by the sensors associated with the poles can then be used to provide a measurement of the torque in the shaft. A suitable circuit for this purpose is shown in Figure 2.

In Figure 2, coil 118 on pole 116 is shown adjacent the shaft 110, and is energised with an appropriate wave form derived from an oscillator 120 and driving circuit 121. For example, the coil 118 may be energised by an alternating current at a frequency and of a magnitude to magnetically saturate the material of the shaft in one sense, followed by saturation in the opposite sense. The sensors associated with poles 114, 115 are shown as coils 122, 123, and the sensors associated with the other poles as coils 124, 125. The coils 122, 123 are connected in series, and their outputs applied, in parallel to them, to a positive peak detector 126 and negative peak detector 127 and thence to a differential amplifier 128. The output signal from differential amplifier 128 is the sum of its input signals, i.e. the combined magnitude of the positive and negative peaks of the signals from coils 122, 123. The signals from coils 124, 125 are similarly dealt with, by positive and negative peak detecting circuits 126a, 127a and a differential amplifier 128a.

A differential amplifier 129, with a zero setting facility, subtracts the signal derived from coils 124, 125 from that of coils 122, 123. The output signal from this differential amplifier then represents the magnitude of torque in the shaft, and is amplified and filtered at 130, 131 to provide a usable output signal.

Referring now to Figure 3 of the drawings this shows a circuit for use with Hall-effect sensors instead of coils. The driving coil 218 on pole 216 is shown adjacent a shaft 210, and is electrically energised with an appropriate wave form derived from an oscillator 220 and driving circuit 221. The Hall-effect sensors associated with poles 214, 215 are shown at 222, 223, and the Hall-effect sensors associated with the other poles at 224, 225. All the Hall-effect sensors are supplied with a constant current from a source 226. The outputs from the Hall-effect sensors 22, 223 are connected in series, to a positive peak detector 227 and negative peak detector 228 in parallel with one another. A differential amplifier 229 gives an output signal representing the combined magnitude of the positve and negative peaks of the signals from Hall-effect sensors 222 223. Similarly the outputs from Hall-effect sensors 224, 225 are connected to peak detectors 230, 231 and differential amplifier 232.

With torque in the shaft 210 in one direction, the output from sensors 22, 223 will increase and that from sensors 224, 225 will decrease. A differential amplifier 233, having a zero setting facility, receives the outputs from differential amplifiers 229, 232, and subtracts them, and the output from amplifier 233 is a direct measure of the torque in the shaft. This output can be amplified by an amplifier 234 whose gain can be varied, and filtered by a filter 235, to provide a usable output signal.

In both the circuits of Figure 2 and Figure 3, the angular position of the shaft may be detected during rotation thereof by, for example, a detector coil responsible to passage of a market formation such as a projection or depression on the shaft surface. There may then be provided a circuit operative so that a measurement of torque is made only when the shaft is in a particular angular position, to eliminate rotational error in the shaft which may be present from run-out, or lack of uniformity in the shaft material.

CLAIMS

1.    Apparatus for measuring torque in a rotating shaft, comprising means (116, 118) for inducing a magnetic field in a surface region of the shaft (110), and means responsive to changes in said magnetic field due to torque to measure said torque, comprising a ferro-magnetic core structure (111) having four poles (113, 114, 115) positioned adjacent the surface of the shaft, with a first pair of poles spaced axially and circumferentially of the shaft, a second pair of poles spaced axially and circumferentially of the shaft in a different orientation from said first pair, a sensor (122 - 125, 222 - 225) associated with each of said poles to measure the magnetic field therein and producing an electrical output signal representing said magnetic field, means (128, 229) for adding the output signals from said sensors of said first pair of poles, means (128a, 232) for adding the output signals from said sensors of the second pair of poles, and means (129, 233) for subtracting the added signals thus derived from one another to produce an output signal representing torque in the shaft.

2.    Apparatus according to Claim 1 further characterised in that said sensors comprise coils (122 - 125) carried by each of said poles.

3.    Apparatus according to Claim 1 further characterised in that said sensors comprise Hall-effect sensors (222 - 225).

4.    Apparatus according to Claim 1 characterised in that said poles (113, 114, 115) are arranged at the corner of a square figure, having its sides parallel to and perpendicular to the rotational axis of the shaft, and the poles of each pair being at opposite corners of said figure.

5.    Apparatus according to Claim 1 further characterised in that said core structure includes a further pole (116), having a coil (118) for inducing said magnetic field in the shaft.

6.    Apparatus according to Claim 5 further characterised in that said coil (118) is energised by an alternating current.

7.    Apparatus according to Claim 6, further characterised by means (126, 127, 126a, 227, 228, 230, 231) for detecting peak values in opposite senses in the output signals from the sensors of each pair of said poles, said peak values being added to give said signals which are subtracted from one another.

FIG.1

0103354

FIG. 2.

FIG. 3.